# EUROPEAN PATENT APPLICATION

(11) **EP 1 017 237 A2**
(43) Date of publication of application: **05.07.2000**
(21) Application number: 99126038.1
(22) Date of filing: 27.12.1999
(51) Int. Cl.: H04N 7/24

(54) **Method of transmitting and receiving data, electronic apparatus, and medium for supplying a data transmitting/receiving program**

(30) Priority: 28.12.1998 JP 37438198
(71) Applicant: SONY CORPORATION, Tokyo (JP)
(72) Inventor: Iijima, Yuko, c/o Sony Corporation, Tokyo (JP)
(74) Representative: Melzer, Wolfgang, Dipl.-Ing.

(57) **Abstract**

A network in which a plurality of electronic apparatuses 11 to 16 are connected to one another. In Step S11, the electronic apparatus 16, which servers as controller, determines the types of data that the electronic apparatuses 12 to 16 can process. In Step S14, the electronic apparatus 11 determines whether it can process data it has received, or whether any other electronic apparatus that receives data can process the data. If it is determined that neither the electronic apparatus 11 nor said any other electronic apparatus can process the data, the apparatus 11 converts the data to one that the apparatus 11 and said any other apparatus can process.

## Description

### BACKGROUND OF THE INVENTION

The present invention relates to a method of transmitting and receiving data and an electronic apparatus, both for use in a network to which a plurality of electronic apparatuses are connected. The invention also relates to a medium for supplying a data-transmitting/receiving program that achieves the method of transmitting and receiving data.

In recent years, it is proposed that various AV (Audio Video) apparatuses, such as set-top boxes (hereinafter referred to as STB) for use in digital television (hereinafter referred to as DTV) or digital satellite broadcasting, should be connected to one another, thereby to constitute a home network system.

Such a home network system has an apparatus called ontroller. The controller has a software module for controlling the apparatuses. It can therefore control each of the apparatuses. To transmit data from any apparatus to another in the home network, the controller controls these apparatus so that the apparatus may transmit the data and the other apparatus may receive the data. Data can therefore be transferred between the apparatuses of the home network system.

In the home network system, the apparatuses that have the same data-processing function, such as an encoder and/or or a decoder, can transmit and receive data to and from each other. However, the apparatus receiving data from another cannot process the data unless it has the same data-processing function as the other apparatus.

The controller may have encoders and/or decoders that process data from all apparatuses of the home network system. If so, the controller can decode the data output from any transmitting apparatus and encode the same so that any receiving apparatus may process the data. Thus, the data can be transferred between the apparatuses, which do not have the same data-processing function. In this case, the controller is inevitably very large and complicated.

### BRIEF SUMMARY OF THE INVENTION

The present invention has been made in consideration of the foregoing. An object of the invention is to provide a method of reliably transmitting and receiving data in the network system described above and an electronic apparatus that is operated by this method. Another object of this invention is to provide a data-transmitting/receiving medium for supplying a program that achieves the method of transmitting and receiving data.

To attain the above objects, the present invention provides a method of transmitting and receiving data between apparatuses connected by a serial bus interface in a network. The method comprises the steps of determining the type of data which each apparatus in the network can process, by means of a control apparatus for controlling the apparatuses in the network, and holding apparatus information representing the type of data determined; and referring to the apparatus information by means of the control apparatus when any apparatus in the network is selected as one for transmitting or receiving data, and detecting any other apparatus that can process the same type of data as the selected apparatus can process.

In this method of transmitting and receiving data, any other apparatus is detected that can transmit and receive data to and from the apparatus that has been selected.

To achieve the above objects, the present invention provides an electronic apparatus for controlling transmitting and receiving of data between apparatuses connected by a serial bus interface in a network. The electronic apparatus comprises: for holding various types of information; and control means for determining type of data which each apparatus in the network can process, holding apparatus information representing the type of data determined, referring to the apparatus information when any apparatus in the network is selected as one for transmitting or receiving data, and detecting any other apparatus that can process the same type of data as the selected apparatus can process.

The electronic apparatus thus constructed can detect any other apparatus in the network that can transmit and receive data to and from the apparatus that has been selected.

To attain the objects described above, the present invention provides a medium for supplying a data-transmitting/receiving program that accomplishes transmission and receipt of data between apparatuses connected by a serial bus interface in a network. The program describes the processes of: determining the type of data that each apparatus in the network can process and holding apparatus information representing the type of data determined; and referring to the apparatus information when any apparatus in the network is selected as one for transmitting or receiving data, and detecting any other apparatus that can process the same type of data as the selected apparatus can process.

The medium supplies a program that can detect any other apparatus in the network that can transmit and receive data to and from the apparatus that has been selected.

To attain the objects described above, the present invention provides a method of transmitting and receiving data between apparatuses connected by a serial bus interface in a network. This method comprises the steps of checking the type of data which each apparatus in the network can process and holding apparatus information representing the type of data checked; determining the type of data output from any apparatus in the network; determining whether any other apparatus that receives the data output from said any apparatus can process the data; and-convening the data to another type of data that said any other apparatus can process, when it is determined that said any other apparatus cannot process the data output from said any apparatus.

In this method of transmitting and receiving data, according to the present invention, the data output from said any apparatus is converted to one that said any other apparatus can process if the any other apparatus cannot process the data output from said any apparatus. Thus, data can be transferred between any desired apparatuses in the network.

To achieve the objects described above, the present invention provides an electronic apparatus for controlling transmitting and receiving of data between apparatuses connected by a serial bus interface in a network. The electronic apparatus comprises: storage means for holding various types of information; and control means for checking the type of data which each apparatus in the network can process, then holding apparatus information representing the type of data determined, determining the type of data output from any apparatus, determining whether any other apparatus that receives the data output from said any apparatus can process the data received, and converting the data to another type of data that said any other apparatus can process, when it is determined that said any other apparatus cannot process the data output from said any apparatus.

This electronic apparatus converts the data output from said any apparatus, to one that said any other apparatus can process, if the any other apparatus cannot process the data output said any apparatus. Therefore, data can be transferred between any desired apparatuses in the network.

To attain the above objects, the present invention provides a medium for supplying a data-transmitting/receiving program that achieves transmission and receipt of data between apparatuses connected by a serial bus interface in a network. The program describes the processes of: checking the type of data which each apparatus in the network can process, and then holding apparatus information representing the type of data checked; determining the type of data output from any apparatus in the network; determining whether any other apparatus that receives the data output from said any apparatus can process the data; and converting the data to another type of data that said any other apparatus can process, when it is determined that said any other apparatus cannot process the data output from said any apparatus.

With this medium, it is possible to convert the data output from said any apparatus, to one that said any other apparatus can process, if the any other apparatus cannot process the data output said any apparatus. Therefore, data can be transferred between any desired apparatuses in the network.

As has been described above in detail, the method of transmitting and receiving data, according to the present invention, is one designed to transmit and receive data between apparatuses connected by a serial bus interface in a network. The method comprises the steps of: determining the type of data which each apparatus in the network can process, by means of a control apparatus for controlling the apparatuses in the network, and holding apparatus information representing the type of data determined; and referring to the apparatus information by means of the control apparatus when any apparatus in the network is selected as one for transmitting or receiving data, and detecting a fly other apparatus that can process the same type of data as the selected apparatus can process.

In this method of this invention, any apparatus that can process the same type of data as the selected apparatus can be detected. Hence, the method can use such an application as will render selectable only those electronic apparatuses that can transmit and receive data to and from any other electronic apparatus that has been selected to output data.

As indicated above, the electronic apparatus according to this invention is one that is designed to control the transmitting and receiving of data between apparatuses connected by a serial bus interface in a network. The electronic apparatus comprises: storage means for holding various types of information; and control means for determining type of data which each apparatus in the network can process, holding apparatus information representing the type of data determined, referring to the apparatus information when any apparatus in the network is selected as one for transmitting or receiving data, and detecting any other apparatus that can process the same type of data as the selected apparatus can process.

The electronic apparatus of the present invention can detect any apparatus that can process the same type of data as the selected apparatus. The electronic apparatus can, therefore, use such an application as will render selectable only those electronic apparatuses that can transmit and receive data to and from any other electronic apparatus that has been selected.

The medium for supplying a data-transmitting/receiving program, according to this invention, is one that supplies a program that achieves transmission and receipt of data between apparatuses connected by a serial bus interface in a network. The program describes the processes of determining the type of data that each apparatus in the network can process and holding apparatus information representing the type of data determined; and referring to the apparatus information when any apparatus in the network is selected as one for transmitting or receiving data, and detecting any other apparatus that can process the same type of data as the selected apparatus can process.

The medium according to the invention can supply a data-transmitting/ receiving program that serves to detect an apparatus capable of reliably transmitting and receiving data to and from any other apparatus selected. Any apparatus supplied with this program can use such an application as will render selectable only those electronic apparatuses that can transmit and receive data to and from any other electronic apparatus that has been selected.

The method of transmitting and receiving data, according to the present invention, is one designed to transmit and receive data between apparatuses connected by a serial bus interface in a network. This method comprises the steps of checking the type of data which each apparatus in the network can process, and holding apparatus information representing the type of data checked; determining the type of data output from any apparatus in the network; determining whether any other apparatus that receives the data output from said any apparatus can process the data; and converting the data to another type of data that said any other apparatus can process, when it is determined that said any other apparatus cannot process the data output from said any apparatus.

In this method of transmitting and receiving data, according to the present invention, the data output from any apparatus is convened to one that any other apparatus that receives the data can process, if the other apparatus cannot process the data output from the first-mentioned apparatus. Thus, data can be transferred between any desired apparatuses in the network.

The electronic apparatus according to this invention is one designed to control the transmitting and receiving of data between apparatuses connected by a serial bus interface in a network. This electronic apparatus comprises: storage means for holding various types of information; and control means for checking the type of data which each apparatus in the network can process, holding apparatus information representing the type of data determined, determining the type of data output from any apparatus, determining whether any other apparatus that receives the data output from said any apparatus can process the data received, and converting the data to another type of data that said any other apparatus can process, when it is determined that said any other apparatus cannot process the data output from said any apparatus.

This electronic apparatus can therefore convert the data output from any apparatus to one that any other apparatus that receives the data can process, if the other apparatus cannot process the data output from the first-mentioned apparatus. Thus, data can be transferred between any desired apparatuses in the network.

The medium of the present invention is one designed to supply a data-transmitting/receiving program that achieves transmission and receipt of data between apparatuses connected by a serial bus interface in a network. The program describes the processes of: checking the type of data which each apparatus in the network can process, and then holding apparatus information representing the type of data checked; determining the type of data output from any apparatus in the network; determining whether any other apparatus that receives the data output from said any apparatus can process the data; and converting the data to another type of data that said any other apparatus can process, when it is determined that said any other apparatus cannot process the data output from said any apparatus.

The data-transmitting/receiving program supplied from the medium of the present invention can, therefore, convert the data output from any apparatus to one that any other apparatus that receives the data can process, if the other apparatus cannot process the data output from the first-mentioned apparatus. The medium can serve to transfer data between any desired apparatuses in the network.

### BRIEF DESCRIPTION OF THE SEVERAL VIEWS OF THE DRAWING

FIG. 1 is a block diagram of an IEEE1394 network to which an embodiment of the invention is applied;
FIG. 2 is a flow chart for explaining the sequence of outputting data from any desired electronic apparatus provided in the IEEE1394 network;
FIG. 3 is a table showing the data items stored in an electronic apparatus that functions as a controller in the IEEE1394 network;
FIG. 4 is a flow chart for explaining the sequence of transferring data between the electronic apparatuses provided in the IEEE1394 network; and
FIG. 5 is a diagram illustrating an isochronous packet that helps accomplish isochronous transmission in the IEEE1394 network.

### DETAILED DESCRIPTION OF THE INVENTION

An embodiment of the present invention will be described, with reference to the accompanying drawings.

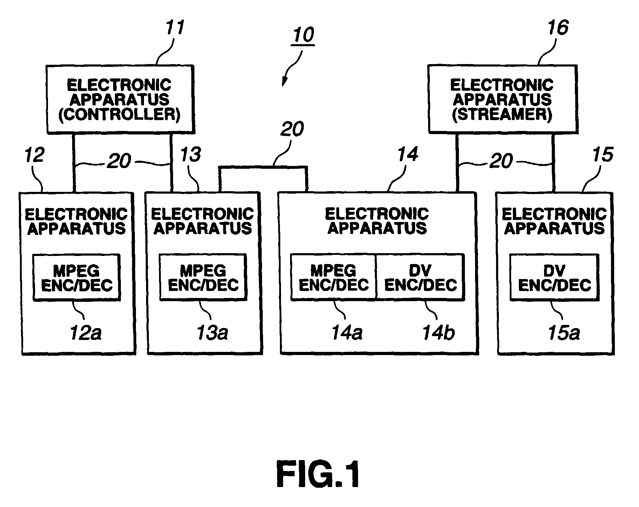

The embodiment of the invention is applied to a network 10 (hereinafter referred to as EEE1394 network in which, as shown in FIG. 1, electronic apparatuses 11 to 16 are connected by an IEEE1394 serial bus 20. The IEEE1394 serial bus 20 is based on the IEEE Std. 1394-1995 IEEE Standard for a High Performance Serial Bus, approved by IEEE (the Institute of Electrical and Electronics Engineering, Inc.).

The electronic apparatus 11 comprises storage means such a memory and control means such as a CPU (Central Processing Unit). Display means such as a monitor is connected to the electronic apparatus 11. The electronic apparatus 11 functions as a controller in the IEEE1394 network 10, for controlling the other electronic apparatuses 12 to 15.

The electronic apparatuses 12 to 15 are AV (Audio Video) apparatuses such as so-called DVCRs (Digital Video Cassette Recorders) that comprise storage means, e.g., a memory. More specifically, the electronic apparatuses 12 and 13 are AV apparatuses that can process MPEG (Moving Picture Expert Group) data only. The apparatuses 12 and 13 have, as sub-unit, MPEG encoder/decoders 12a and 13a (hereinafter referred to as NC/DECs , respectively. The electronic apparatus 14 is an AV apparatus that can process not only MPEG data but also DV (Digital Video) data and has, as sub-units, an MPEG ENC/DEC 14a and a DV ENC/DEC 14b. The electronic apparatus 15 is an AV apparatus that can process DV data only and has, as sub-unit, a DV ENC/DEC 15a.

The electronic apparatus 16 is one called treamer and does not have any particular ENC/DEC. Like a hard disk drive, it can record and reproduce various types of data, such as MPEG data, DV data, digital audio data, irrespective of the data standards.

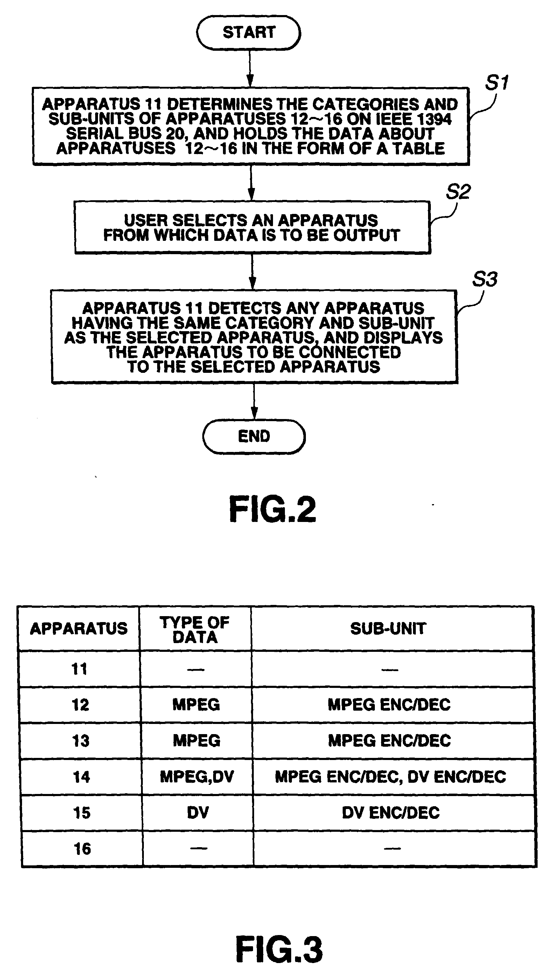

Assume that the electronic apparatuses 11 to 16 are connected to the IEEE1394 serial bus 20 of the IEEE1394 network 10. In Step S1, the CPU used in the electronic apparatus 11 (i.e., controller) determines the category of data each apparatus can process and type of the sub-unit each apparatus has, as is illustrated in FIG. 2. The CPU generates a table of these data item, which is shown in FIG. 3. This table is stored into the memory provided in the electronic apparatus 11. The electronic apparatus 11, which functions as controller, can therefore know the characteristic of any other electronic apparatus. For example, it is known to the apparatus 11 that the apparatuses 12, 13 and 14 can process MPEG data, that the apparatuses 14 and 15 can process DV data, and that the apparatus 16 operates as a streamer.

As is shown in FIG. 2, the user operates the input device (not shown) of the electronic apparatus 11 (i.e., controller) in Step 2, selecting the desired other electronic apparatus from which to output data, as is illustrated in FIG. 2.

In Step S3, the CPU provided in the electronic apparatus 11 (i.e., controller) refers to the table held in the memory, detecting any other electronic apparatus of the same category as the selected one or any other electronic apparatus having the sub-unit of the same type as that of the selected one, as an electronic apparatus that can be connected to the selected apparatus to transmit and receive data to and from the selected electronic apparatus. The CUP then causes the monitor connected to the electronic apparatus thus detected, to display the message showing that the apparatus detected can be selected by operating the input device.

More specifically, if the user selects the electronic apparatus 13 in Step 2, the monitor of the electronic apparatus 11 (i.e., controller) displays the image of the network shown in FIG. 1 under the control of the CPU in Step S3. The image serves as a GUI (Graphical User Interface). In the image of the network, the icons indicating the electronic apparatuses 12, 14 and 16 that can be connected to the selected apparatus are highlighted, while the icon indicating the electronic apparatus 15 is displayed in a different color or brightness, for example in gray, informing the user that the apparatus 15 cannot be selected now.

In the IEEE1394 network 10, the user may operate the input device of the electronic apparatus 11, selecting a desired electronic apparatus, e.g., the electronic apparatus 16, from the electronic apparatuses which are displayed on the monitor connected to the apparatus 11 and which can be selected. In this case, the data encoded in the form of MPEG data is transmitted from the electronic apparatus 13 to the electronic apparatus 16, whereby isochronous transmission is accomplished in the IEEE1394 network 10.

Thus, the IEEE1394 network 10 can use such an application as will render selectable only those electronic apparatuses that can transmit and receive data to and from any other electronic apparatus that has been selected to output data. Hence, data can be reliably transferred between the desired electronic apparatuses.

As described above, the electronic apparatus that is to output data is selected in Step 2. Instead, an electronic apparatus that is to received data may be selected in Step 2. If so. the image of the electronic apparatus outputting the data, which the electronic apparatus selected can receive and process, can be displayed as one that serves as a GUI.

There will be described below the sequence of processes for causing given electronic apparatuses to transmit and receive data to and from one another in the IEEE1394 network 10.

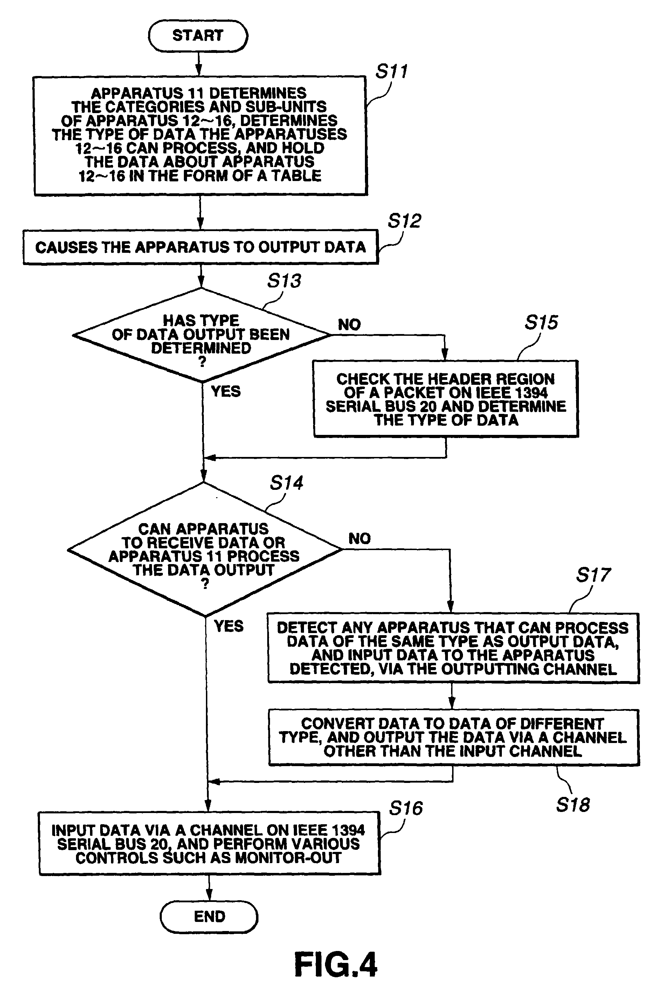

In the IEEE1394 network 10, the CPU provided in the electronic apparatus 11 (i.e., controller) determines the categories and sub-units of the all other electronic apparatuses 12 to 16 connected to the IEEE serial bus 20, in Step S11 as is illustrated in FIG. 4. In Step S11, too, the CPU determines the type of data the electronic apparatuses 12 to 16 can process. The data that represents the categories and sub-units of the electronic apparatuses 12 to 16 and the type of data determined is held in the form of the table illustrated in FIG. 3, in the memory incorporated in the electronic apparatus 11.

In the electronic apparatus 11 (i.e., controller), the CPU transmits a control signal or the like to any desired electronic apparatus from which desired data should be output in Step S12, thereby instructing the desired apparatus to output the data. The data is incorporated into, for example, an isochronous packet, which is output from the desired electronic apparatus.

Next, the CPU provided in the electronic apparatus 11 (i.e., controller) determines in Step S13, whether the type of the data output in Step S12 has determined or not. If the type of the data has been determined, the flow goes to Step S14.

If the type of the data has not been determined, the flow goes to Step S15. In Step S15, the CPU of the electronic apparatus 11 (i.e., controller) checks the header region of the isochronous packet on the IEEE serial bus 20, determining the type of the data from the information contained in the header region. Then, the flow goes to Step S14.

In Step S14, the CPU of the electronic apparatus 11 (i.e., controller) that has determined the type of data output refers to the table prepared in Step S11. The CPU thus determines whether or nor the data output in Step S12 can be input to the receiving apparatus or whether the electronic apparatus 11 can process or not the data that has been output in Step S12.

If the data can be input to the receiving apparatus or if the electronic apparatus 11 can process the data, the electronic apparatus 11 (i.e., controller) performs Step S16. In Step S16, the data is input to the receiving apparatus through a channel (hereinafter referred to as h on the IEEE 1394 serial bus 20 under the control of the CPU. The data is decoded in the receiving apparatus. Various controls are effected in the receiving apparatus, thereby output the data decoded to a monitor, if any, connected to the receiving apparatus. Thus, the sequence of processes shown in FIG. 4 terminates.

If the data cannot be input to the receiving apparatus, nor can the electronic apparatus 11 process the output data, the flow goes to Step S17. In Step S17, the CPU of the electronic apparatus 11 refers to the table, detecting any apparatus which can process data of the same type as the output data and which can convert the output data to data that the receiving apparatus can receive. Then, the data is input to the apparatus thus detected via the Ch through which the isochronous packet has been transmitted.

In Step S18, the data is converted in the electronic apparatus detected in Step S17, under the control of the CPU provided in the electronic apparatus 11 (i.e., controller). The data converted is output via a Ch other than the Ch through which the data has been input to the electronic apparatus.

In Step S16, the CPU of the electronic apparatus 11 (i.e., controller) controls the electronic apparatus that has received the converted data, which decodes the data. In Step 16, too, various controls, including monitor-out control, are effected. Thus, the sequence of processes shown in FIG. 4 terminates.

In the sequence of processes, described above, the user can of course instructs that monitor-off be effected on any electronic apparatus that receives or transmits data or be effected on any data input, by operating the input device provided in the electronic apparatus 11 that function as controller.

The sequence of processes, described above, will be explained in greater detail, assuming that the electronic apparatus 13 is a digital satellite broadcast receiver for processing MPEG data, that the MPEG data obtained by encoding a movie program received by the apparatus 13 is stored in the electronic apparatus 16 which is a streamer, that the DV data recorded by the electronic apparatus 14 is recorded in the electronic apparatus 16, and that the movie DV data is stored in the electronic apparatus 16, and that the movie program and DV data are reproduced and output to the monitor (not shown) that the apparatus 11 has. Here it also assumed that the monitor that the apparatus 11 has incorporates a decoder that can process MPEG data. It will be first explained how the MPEG data is reproduced.

First, in Step S12 the CPU of the electronic apparatus 11 (i.e., controller) instructs the electronic apparatus 16 (i.e., streamer) to output the MPEG data the apparatus 16 stores, after the table has been prepared in Step S11. So instructed, the electronic apparatus 16 puts the MPEG data into an isochronous packet and outputs the isochronous packet to, for example, a channel Ch0.

Next, the CPU provided in the electronic apparatus 11 (i.e., controller) determines, in Step S13, whether the type of data output from the electronic apparatus 16 (i.e., streamer) to the channel Ch0 has been determined or not.

If the data output is known to be MPEG data, the flow goes to Step S14. In Step S14, the CPU of the electronic apparatus 11 (i.e., controller) refers to the table prepared in Step S11, thus determining whether the apparatus that should receive the data, can received the data or not. In this case, the CPU determines if the electronic apparatus 11 can process the data.

The electronic apparatus 11 (i.e., controller) has a monitor that incorporates a decoder that can process MPEG data and can therefore process MPEG data. In Step S16, the electronic apparatus 16 (i.e., controller) decodes the MPEG data output from the electronic apparatus 16 (i.e., streamer) via Ch0 under the control of the CPU. The MPEG data decoded is output to the monitor.

If the type of the data output to Ch0 from the electronic apparatus 16 (i.e., streamer) is not determined in Step S13, the flow goes to Step S15. In Step S15, the CPU provided in the electronic apparatus 11 (i.e., controller) checks the header region of the isochronous packet on the IEEE1394 serial bus 20. The CPU determining that the data is MPEG data, from the information contained in the header region. Then, the flow goes to Step S14.

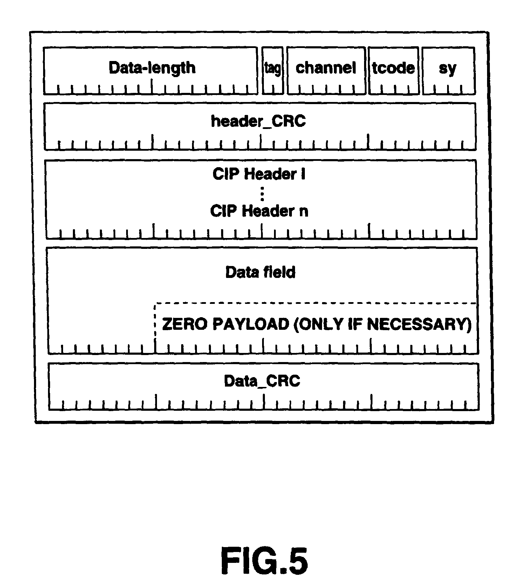

The isochronous packet has the format illustrated in FIG. 5. As shown in FIG. 5, the data field of the packet contains data called CIP (Common Isochronous Packet) header. In the CIP header, the information identifying the type of the data stored in the packet is described.

In Step S15 (FIG. 4), the CPU of the electronic apparatus 11 (i.e., controller), checks, for example, the CIP header in the isochronous packet being transmitted via the IEEE1394 serial bus 20, thereby determining the type of the data. Namely, the data is found MPEG data.

In the IEEE1394 network 10, various processes are sequentially performed as described above, and the electronic apparatus 11 (i.e., controller) decodes the MPEG data output from the electronic apparatus 16 (i.e., streamer). Therefore, the MPEG data can be output to the monitor the electronic apparatus 11 has. The user can enjoy seeing the desired movie program.

To reproduce the DV data, the CPU of the electronic apparatus 11 (i.e., controller) instructs the electronic apparatus 16 (i.e., streamer) to output the DVD data the apparatus 16 stores, after the table has been prepared in Step S11. So instructed, the electronic apparatus 16 inserts the DV data into an isochronous packet and outputs the isochronous packet to, for example, the channel Ch0.

Next, the CPU provided in the electronic apparatus 11 (i.e., controller) determines, in Step S13, whether the type of data output from the electronic apparatus 16 (i.e., streamer) to the channel Ch0 has been determined or not.

If the data output is known to be DV data, the flow goes to Step S14. In Step S14, the CPU of the electronic apparatus 11 (i.e., controller) refers to the table prepared in Step S11, thus determining whether the apparatus that should receive the data, can received the data or not. In this case, the CPU determines if the electronic apparatus 11 can process the data by itself.

If the data output is not known to be DV data, the flow goes to Step S15. In Step S15, the CPU provided in the electronic apparatus 11 (i.e., controller) checks, for example, the CIP header of the isochronous packet on the IEEE1394 serial bus 20. The CPU determining that the data is DV data, from the information contained in the CIP header.

The electronic apparatus 11 (i.e., controller) has a monitor that incorporates a decoder that can process MPEG data only, not able to process DV data. Hence, in Step S17, the electronic apparatus 11 (i.e., controller) refers to the table prepared in Step S11, detecting any electronic apparatus that can process the DV data and convert the DV data to MPEG data. For example, the apparatus 11 detects the electronic apparatus 14 that comprises not only the an ENG/DEC 14a that can process MPEG data, but also the ENC/DEC 14b that can process DV data. The DV data output from the electronic apparatus 16 (i.e., streamer) is thereby input to the electronic apparatus 14 through the channel Ch0.

In Step S18, the CPU of the electronic apparatus 11 (i.e., controller) causes the ENC/DEC 14b of the electronic apparatus 14 to decode the DV data. Thereafter, the ENC/DEC 14a encodes the DV data thus decoded, to MPEG data. The MPEG data is output to, for example, the channel Ch1.

In Step S16, the electronic apparatus 11 (i.e., controller) receives the MPEG data from the electronic apparatus 14, and the CPU of the apparatus 11 decodes the MPEG data. The MPEG data decoded is output to the monitor.

In the IEEE1394 network 10, various processes are sequentially performed as described above, and the DV data output from the electronic apparatus 16 (i.e., streamer) can be output to the monitor of the electronic apparatus 11 even if the apparatus 11 (i.e., controller) has no ENC/DEC that can process DV data. Hence, the user can enjoy seeing the desired movie program recorded in the form of DV data

The IEEE1394 network 10 described above, or an embodiment of the present invention, can use an application that can select only those electronic apparatuses that can transmit and receive data to and from any other electronic apparatus selected to output data. Hence, data can be reliably transferred between the desired electronic apparatuses.

Further, in the IEEE1394 network 10, data can be reliably transferred between the electronic apparatuses desired. Even if the data is of the type that at least one electronic apparatus desired cannot process, any other apparatus desired converts the data to one that can be processed by said at least one electronic apparatuses desired. Therefore, the data can be transferred in the IEEE1394 network 10, even if the controller, the streamer or the like does not have an ENC/DEC that can process the data. Thus, the controller, the streamer and the like can be simplified in structure.

The data-transmitting/receiving program for performing the sequence of processes described above may be stored in the memory provided in the electronic apparatus 11 that functions as controller. Alternatively, the program may be provided in the form of a recording medium such as a CD-ROM. The data-transmitting/receiving program recorded in such a recording medium is written or stored into the memory provided in the electronic apparatus 11. Holding the program, the electronic apparatus 11 can function as controller to perform the sequence of processes described above.

The present invention is not limited to the embodiment described above. Rather, this invention can be applied not only to an IEEE1394 network. but also to the so-called Insernet and a network having digital serial buses such as USBs (Universal Serial Buses).

Moreover, in the present invention it is possible to transfer digital data converted from existing video signals, such as NTSC (National Television System Committee) signals, between the electronic apparatuses. In this case, the monitor the electronic apparatus 11 (i.e., controller) only needs to have the function of performing D/A conversion on the input data, thus outputting analog signals. The monitor need not incorporate a decoder. The electronic apparatus 11 can serve as a controller, though it is simple in structure.

In the embodiment described above, data is transferred by means of the isochronous transmission achieved through the IEEE1394 serial bus 20. It is of course possible, nonetheless, to use asynchronous transmission, i.e., asynchronous transfer method for IEEE1394, in order to transfer so-called Java data or JPEG (Joint Photographic Experts Group) data between the electronic apparatuses. In this case, at the time it is confirmed that the electronic apparatuses 11 to 16 have been connected to the IEEE1394 serial bus 20, any electronic apparatus to transmit data holds attribute data (e.g., the type of data) in storage means (e.g., a memory) in the form of so-called descriptor. The descriptor can be read from any electronic apparatus to any other electronic apparatus in the in the IEEE1394 network 10. Hence, the electronic apparatus 11, which functions as controller, can determine the type of data in Step S15 if it refers to the contents of this descriptor.

In the IEEE1394 network 10 described above, the electronic apparatus 11 is used as controller. Instead, a controller may be incorporated into an electronic apparatus that receives and transmit data.

Only one electronic apparatus. i.e., the apparatus 11, functions as controller in the IEEE1394 network 10. Nonetheless, two or more electronic apparatuses may function as controllers in the present invention.

Various changes and modifications can be of course made without departing from the spirit and scope of the present invention.

## Claims

1. A method of transmitting and receiving data between apparatuses connected by a serial bus interface (20) in a network (10), comprising the steps of:
determining the type of data which each apparatus in the network can process, by means of a control apparatus (11) for controlling the apparatuses (11-16) in the network (10), and
holding apparatus information representing the type of data determined; and
referring to the apparatus information by means of the control apparatus (11) when any apparatus in the network is selected as one for transmitting or receiving data, and
detecting any other apparatus that can process the same type of data as the selected apparatus can process.

2. A method according to claim 1, wherein the apparatus detected in the step of detecting any other apparatus is indicated as one that can be selected.

3. An electronic apparatus for controlling transmitting and receiving of data between apparatuses (11-16) connected by a serial bus interface (20) in a network (10), comprising:
storage means for holding various types of information; and
control means for determining type of data which each apparatus in the network can process, holding apparatus information representing the type of data determined, referring to the apparatus information when any apparatus in the network is selected as one for transmitting or receiving data, and detecting any other apparatus that can process the same type of data as the selected apparatus can process.

4. An electronic apparatus according to claim 3, further comprising display means for indicating the apparatus detected by the control means, as one that can be selected.

5. A medium for supplying a data-transmitting/receiving program that achieves transmission and receipt of data between apparatuses (11-16) connected by a serial bus interface (20) in a network (10), said program describing the processes of:
determining the type of data which each apparatus (11-16) in the network (10) can process and holding apparatus information representing the type of data determined; and
referring to the apparatus information when any apparatus in the network is selected as one for transmitting or receiving data, and detecting any other apparatus that can process the same type of data as the selected apparatus can process.

6. A medium according to claim 5, wherein the apparatus detected in the process of detecting any other apparatus is indicated as one that can be selected.

7. A method of transmitting and receiving data between apparatuses (11-16) connected by a serial bus interface (20) in a network (10), comprising the steps of:
checking the type of data that each apparatus in the network can process and holding apparatus information representing the type of data checked;
determining the type of data output from any apparatus in the network;
determining whether any other apparatus that receives the data output from said any apparatus can process the data; and
convening the data to another type of data that said any other apparatus can process, when it is determined that said any other apparatus cannot process the data output from said any apparatus.

8. A method according to claim 7, wherein, in the step of converting the data output from said any apparatus, the apparatus information is referred to when it is determined that said any other apparatus cannot process the data output from said any apparatus, a third apparatus is detected that has a function of converting the data to one that said any other apparatus can process, and the third apparatus is controlled to convert the data to such data.

9. A method according to claim 7, wherein, in the step of detecting the type of data, the data output from said any apparatus is stored, a header region of a packet on a serial bus constituting the network is checked, and determining the type of data output from said any apparatus, from information contained in the header region.

10. A method according to claim 7, wherein, in the step of detecting the type of data, attribute information held in said any apparatus is checked, and the type of data output from said any apparatus is determined from the attribute information.

11. An electronic apparatus for controlling transmitting and receiving of data between apparatuses (11-16) connected by a serial bus interface (20) in a network (10), comprising:
memory means for holding various types of information; and
control means for checking the type of data which each apparatus in the network can process, holding apparatus information representing the type of data determined, determining the type of data output from any apparatus, determining whether any other apparatus that receives the data output from said any apparatus can process the data received, and convening the data to another type of data that said any other apparatus can process, when it is determined that said any other apparatus cannot process the data output from said any apparatus.

12. An electronic apparatus according to claim 11, wherein the control means refers to the apparatus information when it is determined that said any other apparatus cannot process the data output from said any apparatus, detects a third apparatus that has a function of converting the data to one that said any other apparatus can process, and controls the third apparatus, causing the same to convert the data to such data.

13. An electronic apparatus according to claim 11, wherein the control means stores the data output from said any apparatus, checks a header region of a packet on a serial bus constituting the network, and determines the type of data output from said any apparatus, from information contained in the header region.

14. An electronic apparatus according to claim 11, wherein the control means checks attribute information held in said any apparatus and determines the type of data output from said any apparatus, from the attribute information.

15. An electronic apparatus according to claim 11, wherein, like said third apparatus, said any apparatus has the function of converting the data to one that said any other apparatus can process.

16. A medium for supplying a data-transmitting/receiving program that achieves transmission and receipt of data between apparatuses (11-16) connected by a serial bus interface (20) in a network (10), said program describing the processes of:
checking the type of data that each apparatus in the network can process and holding apparatus information representing the type of data checked;
determining the type of data output from any apparatus in the network;
determining whether any other apparatus that receives the data output from said any apparatus can process the data; and
convening the data to another type of data that said any other apparatus can process, when it is determined that said any other apparatus cannot process the data output from said any apparatus.

17. A medium according to claim 16, wherein, in the process of converting the data output from said any apparatus, the apparatus information is referred to when it is determined that said any other apparatus cannot process the data output from said any apparatus, a third apparatus is detected that has a function of converting the data to one that said any other apparatus can process, and the third apparatus is controlled to convert the data to such data.

18. A medium according to claim 16, wherein, in the process of determining the type of data, the data output from said any apparatus is stored, a header region of a packet on a serial bus constituting the network is checked, and the type of data output from said any apparatus is determined from information contained in the header region.

19. A medium according to claim 16, wherein, attribute information held in said any apparatus is checked, and the type of data output from said any apparatus is determined from the attribute information.
